# EUROPEAN PATENT APPLICATION

(11) **EP 1 544 027 A2**
(43) Date of publication of application: **22.06.2005**
(21) Application number: 04029904.2
(22) Date of filing: 16.12.2004
(51) Int. Cl.: B60N 2/30, B60N 2/20, B60N 2/26, B60N 2/06, B60N 2/235, B60N 2/14, B60N 2/28

(54) **Vehicle seat**

(30) Priority: 18.12.2003 JP 2003420869; 24.08.2004 JP 2004244141
(71) Applicant: Mazda Motor Corporation, Aki-gun, Hiroshima 730-8670 (JP)
(72) Inventor: Kinnou, Kenji, Aki-gun Hiroshima 730-8670 (JP); Kimoto, Eiji, Aki-gun Hiroshima 730-8670 (JP)
(74) Representative: Müller-Boré & Partner Patentanwälte

(57) **Abstract**

In a vehicle having a cabin (**2**) with an ingress-and-egress opening portion (**1**) on its side provided between a front-wheel axle (**3**) and a rear-wheel axle (**4**), there are provided plural passenger seats (**7b**) including a driver seat (**7a**) on a floor panel (**5**), a support member (**71**) to support its seat cushion (**73**) and seat back (**75**) in such a manner that the seat cushion (**73**) is selectively held in sitting state of a substantially horizontal position or in stored state of a substantially upright position, whereas the seat back (**75**) is selectively held in first-use state of a substantially upright position or in second-use state of a substantially horizontal position, and seat rails (**10, 11**) to support the passenger seat (**7b**) movably in a longitudinal direction. An effective use of passenger seats can be improved, and an utility space in the cabin can be enlarged at need.

## Description

The present invention relates to a seat device of a vehicle and to a vehicle provided therewith, in which a cabin including an ingress-and-egress opening portion on its side face is provided between a front-wheel axle and a rear-wheel axle, comprising plural passenger seats including a driver seat which are disposed on a floor panel provided at a lower portion of the cabin.

Conventionally, the following seat storing structure of a vehicle including a front-row seat comprising an assistant seat disposed behind an instrument panel provided at a front portion in the cabin is known as shown in Japanese Patent Laid-Open Publication No. 2003-226175. Namely, the above-descried front-row seat is supported by a slide mechanism so as to move in the longitudinal direction of the vehicle and reach its foremost stored position beyond its normally-adjustable range for sitting, whereby the front-row seat can be stored by locating its seat cushion below the instrument panel when the seat is not used.

Also, a seat device of an automotive vehicle including a driver seat, an assistant seat and a rear seat behind them is known as shown in Japanese Patent Laid-Open Publication No. 2000-238560, in which there is provided a guide rail to support the assistant seat movably in the longitudinal direction between its position below a dash board and its normal use position beside the driver seat, whereby the assistant seat can be stored by being moved forward with its seat back folded on its seat cushion.

Storing the front-row seat by locating its seat cushion below the instrument panel during the non-use of seat, as shown in the above-described former publication, can provide a large space before a rear-row seat disposed behind the front-row seat. However, this seat storing structure of a vehicle has a problem that the front-row seat could not be used effectively. Because the seat is stored such that its seat back is located along the instrument panel, which may make it impossible for the seat to be used when it is stored.

Meanwhile, storing the assistant seat by moving it forward with its seat back folded on its seat cushion during the non-use of seat, as shown in the above-described latter publication, can use the assistant seat effectively by providing a cup holder or a tray on a back face of the seat back. However, such an use of the assistant seat is still limited, and therefore further improved utility has been desired.

The present invention has been devised in view of the above-described problems, and an object of the present invention is to provide improve an effective use of passenger seats including the assistant seat and others, and preferably enlarge an utility space in the cabin at need.

This object is solved by a seat device for a vehicle according to the present invention of claim 1 and by a vehicle provided therewith according to claim 11. Preferred embodiments of the present invention are subject of the dependent claims.

According to the present invention, there is provided a seat device of a vehicle, in which a cabin including an ingress-and-egress opening portion on a side face thereof is provided between a front-wheel axle and a rear-wheel axle, comprising plural passenger seats including a driver seat, which are disposed on a floor panel provided at a lower portion of the cabin, a support member operative to support a seat cushion and a seat back of at least one of the passenger seats in such a manner that the seat cushion is or can be selectively held or positioned in a sitting state of a substantially horizontal position or in a stored state of a substantially upright position with a front end thereof in the sitting state located upward, whereas the seat back is or can be selectively held or positioned in a first-use state of a substantially upright position or in a second-use state of a substantially horizontal position with a lower end thereof in the first-use state located forward, and a seat rail operative to support said at least one of passenger seats such that the at least one of passenger seats moves forward substantially in a longitudinal direction of the vehicle.

Accordingly, by holding the seat cushion in its stored state of the substantially upright position and moving forward the passenger seat with the seat back held in its second-use state of the substantially horizontal position along the seat rail, the passenger seat can be preferably used as a temporary baby-care bed, in which the seat back performs as a bed body and the seat cushion performs as a protect member, and there particularly can be also provided a large utility space behind the passenger seat.

According to a preferred embodiment, at least one of passenger seats supported by the support member comprises a front-row seat which is located at or near a front portion in the cabin, and a rear-row seat is provided behind the front-row seat.

Accordingly, by holding the seat cushion of the front-row seat including the assistant seat in its stored state of the substantially upright position and moving forward the front-row seat with the seat back held in its second-use state of the substantially horizontal position along the seat rail, the front-row seat can be used preferably as the temporary baby-care bed or as a support surface for other purposes (such as transport of large objects) with the large utility space behind it, and therefore the parent or somebody preferably can easily take care of the baby on the seat, such as a diaper changing, sitting on or being positioned in front of the rear-row seat.

According to another preferred embodiment, there is provided an instrument panel extending substantially in a vehicle width direction at a front end portion of the cabin, a recessed storing portion is formed at a portion of the instrument panel which corresponds to at least part of the front-row seat, and the front-row seat moves forward along the seat rail, whereby at least part of the front-row seat can be stored in the storing portion.

Accordingly, by moving the front-row seat forward along the seat rail and then storing at least part of the front-row seat in the storing portion formed at the instrument panel, the front-row seat can be used as the temporary baby-care bed and the rear space behind the front-row seat can be also enlarged effectively.

According to another preferred embodiment, the front-row seat moves forward along the seat rail with the seat cushion thereof being held in the stored state, whereby the seat cushion of the front-row seat can be at least partly stored in the storing portion.

Accordingly, by moving the front-row seat including the assistant seat forward along the seat rail with its seat cushion held in its stored state of the substantially vertical position and then at least partly storing the seat cushion in the storing portion formed at the instrument panel, the rear space behind the front-row seat can be enlarged effectively. Further, the front-row seat can be used as the temporary baby-care bed, maintaining such an enlarged utility rear space behind the front-row seat, when the seat back of the front-row seat is held in its second-use state of the substantially horizontal position.

According to another preferred embodiment, the front-row seat moves forward along the seat rail with the seat cushion thereof being held in the stored state and with the seat back thereof being held in the first-use state, whereby the seat cushion and seat back of the front-row seat can be at least partly stored in the storing portion.

Accordingly, by moving the front-row seat forward along the seat rail with its seat cushion and seat back held in their substantially upright positions and then at least partly storing the seat cushion and seat back in the storing portion formed at the instrument panel, a larger space can be provided behind the front-row seat.

According to another preferred embodiment, at least part of the seat rail supporting the front-row seat movably substantially in the longitudinal direction of the vehicle and at least part of the seat rail supporting the rear-row seat movably in the longitudinal direction of the vehicle are formed of a common rail member.

Accordingly, because of commonality of the part of seat rails, manufacturing costs can be reduced with a decrease of the number of parts, and an attaching rigidity of the seat rails can be strengthened effectively, facilitating attachment works of the seat rails.

According to another preferred embodiment, the seat back of at least one of passenger seats supported by the support member in the second-use state is configured such that a height of a rear end portion thereof (preferably above a road surface) is lower than that of a front end portion thereof (preferably above the road surface).

Accordingly, because the seat back is positioned in a slant state (particularly with respect to a horizontal plane) where its rear portion is lower, the baby's head placed on the front end portion of the seat back can be located at a higher level than the baby's feet placed on the rear end portion of the seat back, resulting in a stable position of the baby on the bed.

According to another preferred embodiment, at least one of passenger seats supported by the support member comprises either one of plural front-row seats which are disposed substantially side by side substantially in a vehicle width direction, another seat located beside the either one seat includes a seat back which is configured so as to be selectively held in a standing state of a substantially upright position or in a lying state of a substantially horizontal position, and at a portion near the either one seat is provided a shift device operative to shift a state of the seat back between the standing state and said lying state.

Accordingly, when one of the plural front-row seats disposed side by side is used as the above-described temporary baby-care bed, the seat back of another seat beside this seat can be used as a tray or the like on which any articles are placed temporarily, by shifting the seat back's state from its standing state to its lying state via the shift device provided at the seat.

According to another preferred embodiment, at least one of passenger seats supported by the support member is located substantially at a side of the ingress-and-egress opening portion, there is provided a rotational support mechanism to support at least one of passenger seats rotatably around a rotational axis extending in a substantially vertical direction, whereby the at least one of passenger seats can be selectively held in a state where a back face of the seat back thereof turns substantially rearward or in a state where the back face of the seat back thereof turns substantially toward the ingress-and-egress opening portion.

Accordingly, when the seat is used as the temporary baby-care bed after rotating the seat such that the back face of its seat back turns toward the ingress-and-egress opening portion, the care of the baby on the bed can be properly conducted through the ingress-and-egress opening portion from the outside of vehicle.

According to another preferred embodiment, there are provided a hinge door to open and close the ingress-and-egress opening portion by rotating around a door hinge and a slide door to open and close the ingress-and-egress opening portion by sliding in the longitudinal direction of the vehicle, and at least one of passenger seats supported by the support member and equipped with the rotational support mechanism is located at a portion corresponding to the slide door.

Accordingly, when the seat is rotated such that the back face of its seat back turns toward the ingress-and-egress opening portion and the ingress-and-egress opening portion beside the rotated seat is opened widely, the wide space can be provided beside the seat and therefore the care of the baby on the bed can be conducted easily.

According to the invention there is further provided a vehicle comprising or provided with a vehicle seat device according to the invention or a preferred embodiment thereof.

Other features, aspects and advantages of the present invention will become apparent from the following description which refers to the accompanying drawings.
FIG. **1** is a side view showing a seat device of a vehicle according to an embodiment of the present invention.
FIG. **2** is a sectional elevation view showing a specific structure of a disposed portion of a front-row seat.
FIG. **3** is a plan view showing a specific structure of a floor panel.
FIG. **4** is a perspective view showing the specific structure of the floor panel.
FIG. **5** is a plan view showing a structure below the floor panel.
FIG. **6** is a sectional side view showing a specific structure of the floor panel.
FIG. **7** is an explanatory diagram showing a change of an assistant seat.
FIG. **8** is an explanatory diagram showing a state of the assistant seat which has been moved forward.
FIG. **9** is an explanatory diagram showing a use state of the seat device of the vehicle.
FIG. **10** is an explanatory diagram showing a state of the assistant seat stored forward.
FIG. **11** is an explanatory diagram showing another use state of the seat device of the vehicle.
FIG. **12** is an explanatory diagram showing a state of the front-row seat with its seat cushion which is positioned in a slant state.
FIG. **13** is a perspective view showing an example in which a seat cushion of a driver seat is held in a lying state.
FIG. **14** is an explanatory diagram showing a specific structure of a reclining mechanism.
FIG. **15** is an explanatory diagram showing a specific structure of a lock plate of the reclining mechanism.
FIG. **16** is an explanatory diagram showing a specific structure of an operating lever of the reclining mechanism.
FIG. **17** is an explanatory diagram showing the reclining mechanism equipped with a biasing member.
FIG. **18** is an explanatory diagram showing the reclining mechanism which is unlocked.
FIG. **19** is a plan view showing an arrangement of operating levers of the reclining mechanism and a slide engagement mechanism.
FIG. **20** is a perspective view showing a specific structure of the slide engagement mechanism.
FIG. **21** is a perspective view showing a specific structure of an engagement arm.
FIG. **22** is a plan view showing a seat device of a vehicle according to another embodiment of the present invention.
FIG. **23** is a side view showing the seat device of the vehicle according to the above-described embodiment of the present invention.
FIG. **24** is a plan view showing a use state of a first rear-row seat.
FIG. **25** is a plan view showing a seat device of a vehicle according to further another embodiment of the present invention.
FIG. **26** is an exploded perspective view showing a specific structure of a rotational support mechanism for a passenger seat.

Preferred embodiments of the present invention will be described referring to the accompanying drawings. It should be understood that even though embodiments are separately described, single features thereof may be combined to additional embodiments.

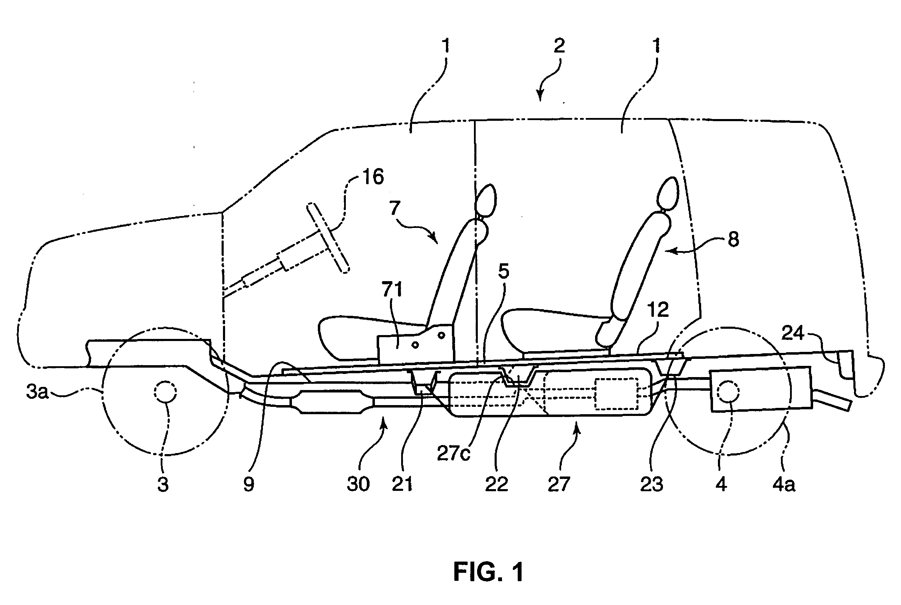

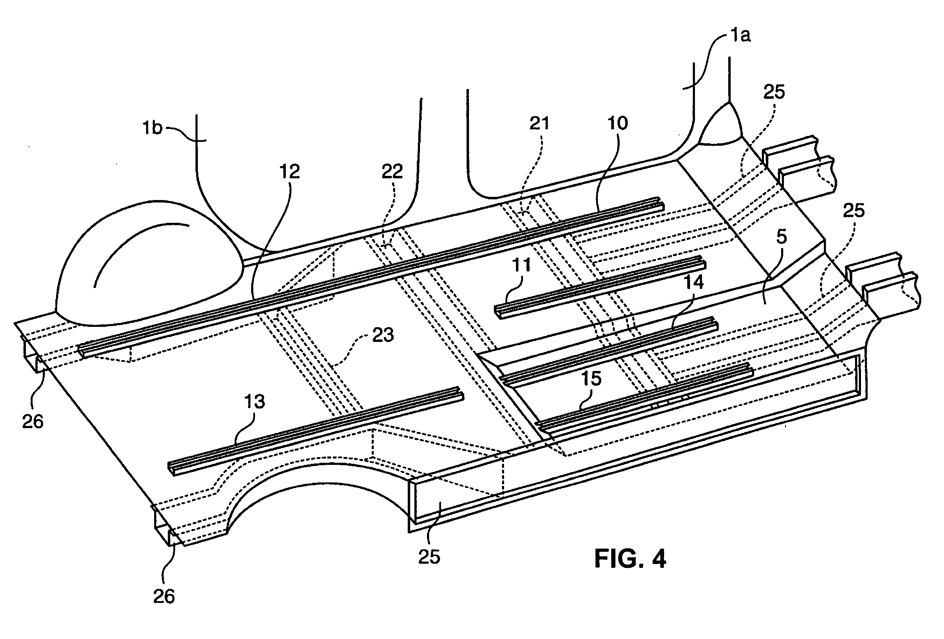

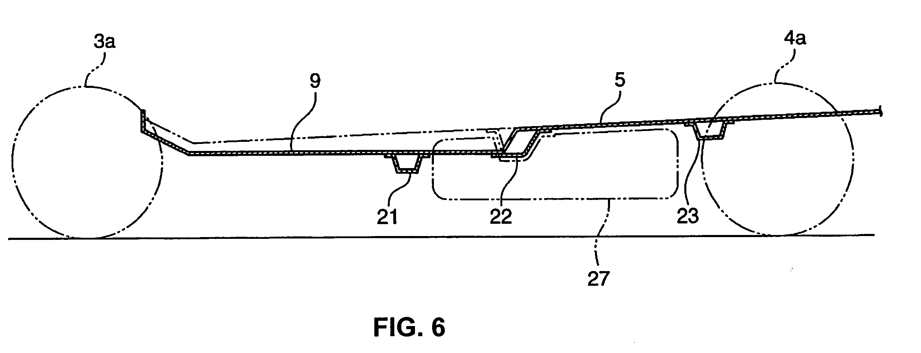

FIGS. **1** through **6** show a schematic structure of a vehicle equipped with a seat device of a vehicle according to an embodiment of the present invention. This vehicle is a so-called mini-van type of FF vehicle, in which a cabin or passenger compartment **2** including an ingress-and-egress opening portion **1** on its side face is provided between a front-wheel axle **3** and a rear-wheel axle **4**, and a vehicle engine (not illustrated) disposed at or near a front portion of a vehicle body drives a pair of front wheels **3a.** Herein, a front door **1a** and a rear door **1b** are provided at the above-described ingress-and-egress opening portion **1** (see FIG. **4**).

A floor panel **5** is provided at a lower portion of the cabin **2** between a lateral or right-and-left side sills **6,** and one or more, preferably plural passenger seats are provided on the floor panel **5** in one or more rows. Namely, there are provided a front-row seat **7** comprising a driver seat **7a** and an assistant seat **7b** at a front portion of floor panel **5**, and a rear-row seat **8** preferably comprising a bench seat behind the front-row seat **7**.

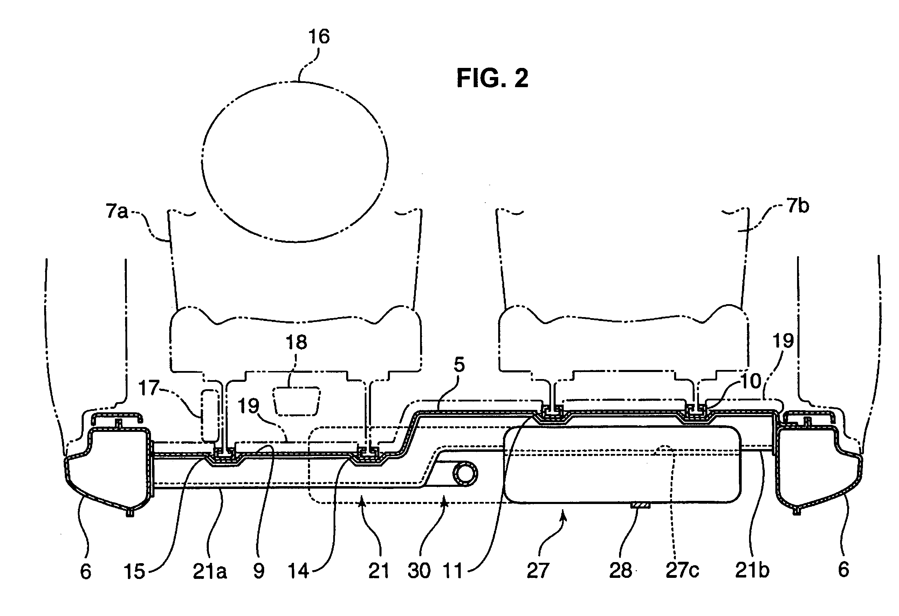

At a front portion of the cabin **2** on which the front-row seat **7** is placed are provided a low-floor portion with a low-level portion of floor panel **5** and a high-floor portion with a high-level portion of floor panel **5,** which are disposed side by side in a vehicle width direction and constitute a difference in level (see FIG. **2**). Specifically, a floor panel portion (hereinafter, referred to as "driver-seat placed portion") on which the driver seat **7a** is placed is positioned at a lower level compared to a floor panel portion (hereinafter, referred to as "other-passenger-seat placed portion") on which other seats comprising the assistant seat **7b** and the rear-row seat **8** are placed. Accordingly, a downward-recessed or stepped portion **9** is formed at the floor panel portion on which the driver seat **7a** is placed, and a bottom face of this recess portion **9** constitutes the above-described low-floor panel portion, whereas the floor portion on which the assistant seat **7b** is placed constitutes the above-described high-floor panel portion. In other words, the driver seat **7a** and the assistant seat **7b** are arranged at floor portions being different in height.

Also, the recess portion **9** is configured such that its bottom face is formed of a substantially horizontal face which is substantially parallel to a contact surface (road surface) of the front and rear wheels **3a** and **4a**. Meanwhile, other portion of the floor panel **5** than the driver-seat placed portion, or the other-passenger-seat placed portion is formed of a substantially flat face which is inclined preferably over its substantially entire length so that its rear is positioned at a higher level. Further, on the floor panel **5** are provided two pairs of right-and-left seat rails **10, 11** and **12,** **13** which respectively support the assistant seat **7b** and the rear-row seat **8** movably substantially in the longitudinal direction of the vehicle. The left seat rail **12** of the rear-row seat **8** and the left seat rail **10** of the assistant seat **7b** preferably are substantially continuously formed of a common or integral rail member. Also, there are provided a pair of seat rails **14** and **15** to support the driver seat **7a** movably substantially in the longitudinal direction of the vehicle on the bottom face of the recess portion **9** at the driver-seat placed portion of the floor panel **5**.

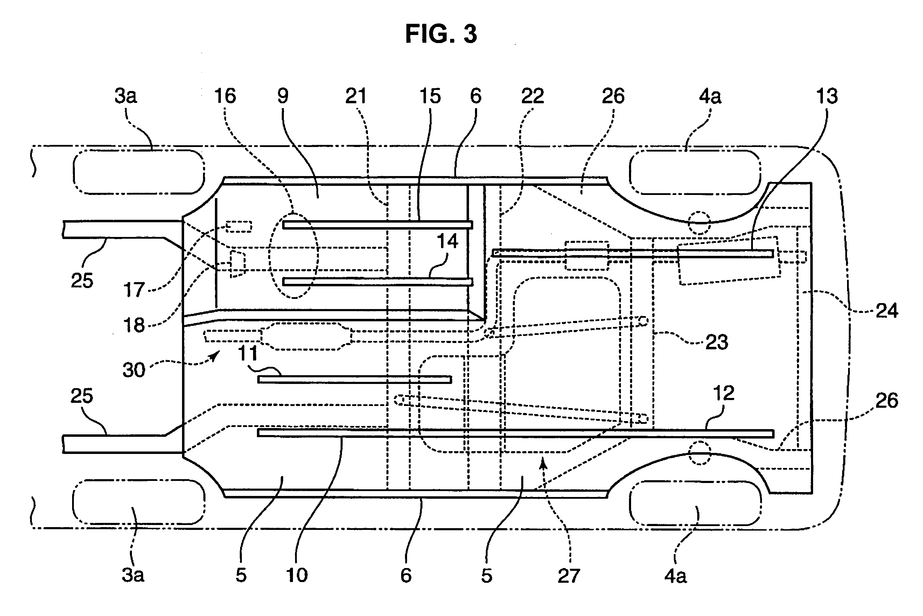

In FIGS. **2** and **3**, reference numeral **16** denotes a steering wheel, reference numeral **17** denotes an accelerator pedal, reference numeral **18** denotes a brake pedal, and there is provided a carpet or floor covering for vehicle **19** on the floor panel **5** to at least partly cover a portion other than a location of the seat rails **10** through **15**, as shown by a two-dotted broken line in FIG. **2**. Below the floor panel **5** are provided No. 2 - No. 4 cross members **21** through **23** and a rear cross member **24**, which extend substantially in the vehicle width direction and are disposed separately from each other. Also, there are respectively provided a pair of right-and-left front frames **25** extending forward from the above-described No. 2 cross member **21**, a pair of rear side frames **26** at the both sides of a rear portion of the floor panel **5**, and the above-described side sills **6** at both-side end portions of the floor panel **5**.

The No. 2 cross member **21** comprises a right-side portion **21a** which is provided along the lower face of the recess portion **9** of the driver-seat placed portion, and a left-side portion **21b** which is provided along the lower face of the floor panel of the assistant-seat placed portion. These portions **21a** and **21b** are disposed with a specified (predetermined or predeterminable) difference in level or height which corresponds to the difference in level or height between the above-described low-floor portion comprised of the bottom face of the recess portion 9 and the high-floor portion comprised of the floor panel face of the assistant-seat placed portion. Also, the No. 3 cross member **22** is disposed along the rear-end face of the recess portion **9**, and a fuel tank **27** is disposed at least partly substantially along the rear-end face and the inside face of the recess portion **9**.

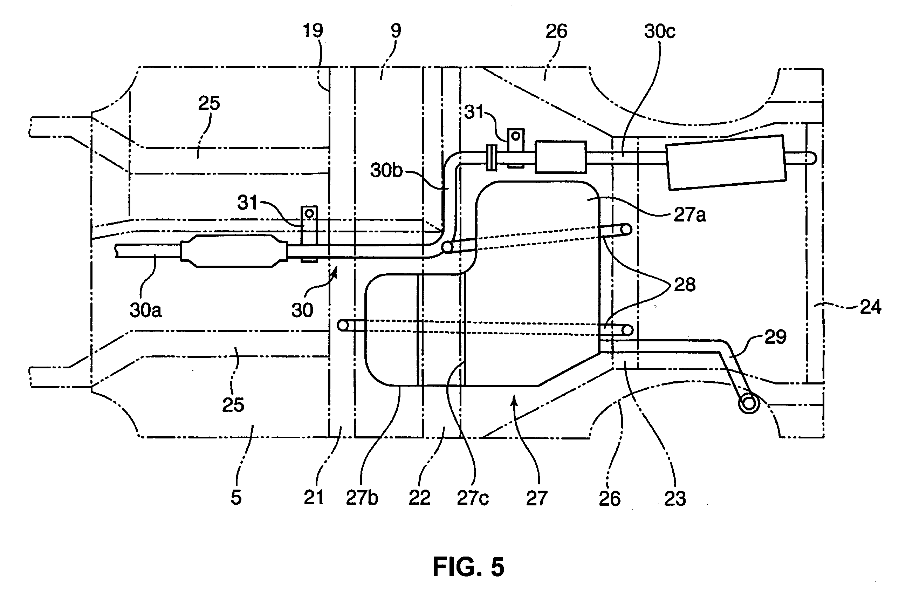

The above-described fuel tank **27** preferably is of a L shape, when viewed from above (see FIG. 3), which comprises a tank-body portion **27a**, which is provided below the rear-row seat **8** so as to at least partly extend substantially in the vehicle width direction along or near the rear face of the No. 3 cross member **22**, and a front-extending portion **27b**, which is provided or arranged at least partly below the assistant seat **7b** so as to at least partly extend substantially forward along the inside face (a side face which is located at the inside of the vehicle) of the recess portion **9**. The fuel tank **27** is supported at the No. 2 - No. 4 cross members **21** through **23** via tank supporting bands **28**, and a fuel supply pipe **29** is coupled to a rear wall of the fuel tank **27** (see FIG. **5**). Also, a recess portion **27c** is formed at the center of an upper face of the fuel tank **27** so as to extend substantially in the vehicle width direction, corresponding to the No. 3 cross member **22**. Accordingly, the No. 3 cross member **22** extending substantially in the vehicle width direction along the center lower face of the floor panel **5** is disposed so as to cross over the upper face of the fuel tank **27**.

Further, there is provided below the floor panel **5** an exhaust pipe **30**, which comprises a front portion **30a** extending substantially rearward from an engine room along or near the side face of the recess portion **9**, a central or intermediate portion **30b** extending substantially in the vehicle width direction between the rear end face of the recess portion **9** and the fuel tank **27**, and rear portion **30c** extending substantially rearward along or near the outside face of the fuel tank **27**. This exhaust pipe **30** is attached to the lower face of the floor panel **5** via mounting means such as hangers **31**.

And, the driver seat **7a** is supported by the seat rails **14** and **15** provided in the recess portion **9** so as to move substantially longitudinally within at least part of the area of the recess portion **9**. The assistant seat **7b** is supported by the seat rails **10** and **11** so as to move substantially longitudinally within at least part of the area from the portion of the instrument panel located at the front end of the cabin **2** to the center of the cabin **2**. Also, the rear-row seat **8** substantially behind the front-row seat(s) **7** is supported by the seat rails **12** and **13** so as to move within at least part of the area from the center to the rear end portion of the cabin **2**.

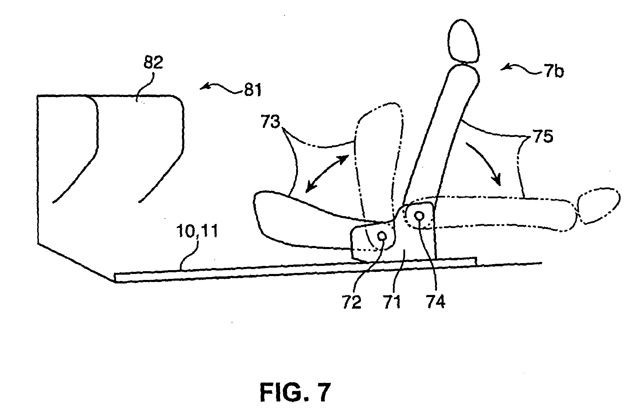

The assistant seat **7b** comprises a seat cushion **73**, as a sitting portion which the passenger sits on, and a seat back **75**, as a back portion which the passenger leans against, as shown in FIG. **7**. The seat cushion **73** is supported by the support member **71** via a pivotal axis **72**, which is provided at or on the support member **71**, in such a manner that the seat cushion **73** is or can be selectively held in its normal sitting state of the substantially horizontal position with its front end face turning forward, or in its stored state, shown by the two-dotted broken line, of the substantially upright position with its front end in its sitting state located upward.

Also, the seat cushion **75** of the assistant seat **7b** is supported by the support member **71** via another pivotal axis **74**, which is provided rearward at the support member **71**, in such a manner the seat back **75** is selectively held in its normal first-use state, shown by a solid line, of the substantially upright position, or in its second-use state, shown by the two-dotted broken line, of the substantially horizontal position with its lower end in its first-use state located forward.

Herein, the pivotal axes **72** and **74**, which pivotally support the seat cushion **73** and the seat back **75** of the assistant seat **7b** respectively, may be formed integrally or unitary at or on or in the seat cushion **73** and the seat back **75**, and/or at or on or in respective brackets which are attached to the seat cushion **73** and the seat back **75** respectively.

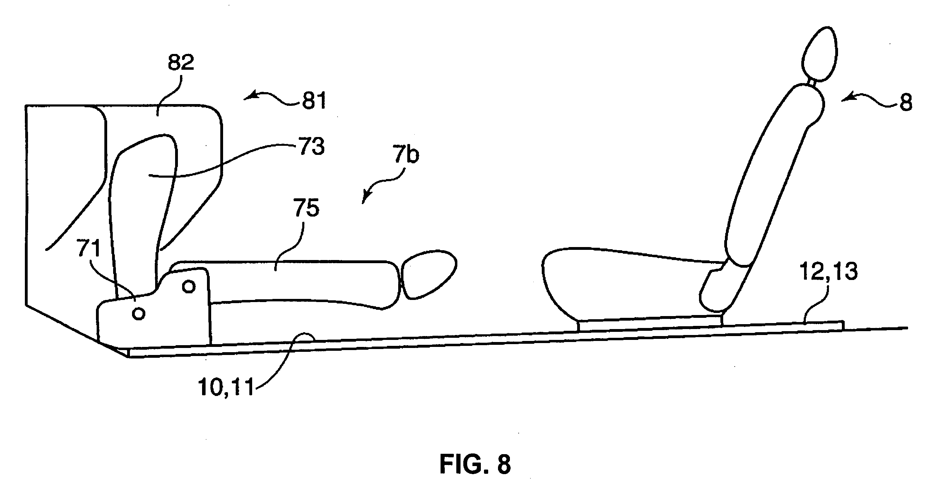

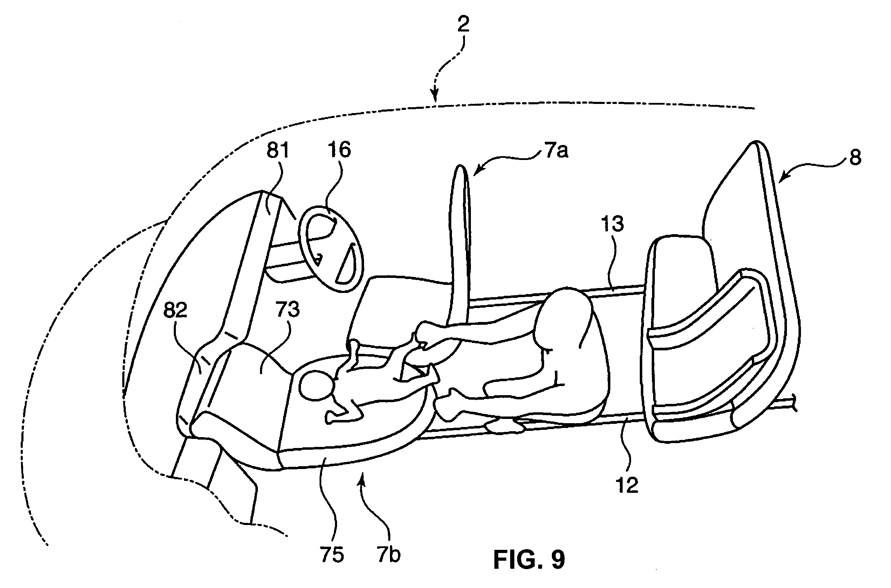

And, as shown in FIGS. **8** and **9**, by moving the assistant seat **7b** to the front end of the cabin **2** along the seat rails **10** and **11** with the seat cushion 73 being held in its stored state of the substantially upright position and the seat back **75** being held in its second-use state of the substantially horizontal position, the assistant seat **7b** can be used preferably as the temporary baby-care bed or surface, in which the seat back **75** performs as a bed body and the seat cushion **73** performs as a protect member.

Also, at a left side portion of the instrument panel **81** located at the front end portion of the cabin **2**, which corresponds to a portion located in front of the assistant seat **7b**, is formed a storing portion **82** which at least partly corresponds to the seat cushion **73** in its stored state of the substantially upright position. Accordingly, by moving the assistant seat **7b** forward, the seat cushion **73** held in its stored state can be at least partly stored in the above-described storing portion **82** formed at the instrument panel **81**.

As described above, there is provided the support member **71** operative to support the seat cushion **73** and the seat back **75** of the assistant seat **7b** as one of passenger seats in such a manner that the seat cushion **73** is selectively held in its normal sitting state of the substantially horizontal position (first position) with its front end face turning forward or in its stored state of the substantially upright position with its front end in its sitting state located substantially upward (second position), whereas the seat back **75** is selectively held in its first-use state of the substantially upright position (first position) or in its second-use state of the substantially horizontal position with its lower end in its first-use state located forward or the upper end reclined backward (second position). And, further there are provided seat rails **10** and **11** operative to support the above-described passenger seat **7b** movably substantially in the longitudinal direction of the vehicle to the front end potion of the cabin **2.** Accordingly, by moving the assistant seat **7b** substantially forward along the seat rails **10** and **11** as shown in FIG. **8**, the assistant seat **7b** can be used as a substantially flat surface preferably as the temporary baby-care bed in which the seat back **75** having a larger area compared to the seat cushion **73** performs as the bed body and the seat cushion **73** performs as the protect member. And, a baby or the like can be laid down stably on this temporary bed of the assistant seat **7b** (also for sleeping), and/or the care of baby can be conducted properly after moving this temporary bed forward in the vehicle.

Also, in the above-described embodiment, the assistant seat **7b** disposed at the front portion in the cabin **2** is used preferably as the temporary baby-care bed by providing the support member **71** supporting the seat cushion **73** and the seat back **75** so as to hold them in their respective states, and there is provided the rear-row seat **8** behind it. Accordingly, a large utility space can be made in front of the rear-row seat **8** by locating the temporary baby-care bed of the assistant seat **7b** at the front portion in the cabin **2**, preferably by arranging the seat cushion **73** at least partly in the storing portion **82** of the instrument panel **81**. Therefore, the passenger can easily and properly conduct the care of the baby lying on the temporary baby-care bed of the assistant seat **7b**, such as the diaper changing, in particular sitting on the rear-row seat **8**.

Particularly, in the case where the rear-row seat **8** is supported by the seat rails **12** and **13** movably substantially in the longitudinal direction of the vehicle like the embodiment described above, a sufficiently large utility space can be made behind the (preferably temporary baby-care bed of) the assistant seat **7b** as shown in Fig. **9**, by moving the rear-row seat **8** rearward and moving the temporary baby-care bed forward in the cabin **2**. Accordingly, it is also possible that the passenger on the rear-row seat **8** conducts the diaper changing or the like, on passenger's knees upon the vehicle floor, and therefore such a baby care can be conducted more effectively.

Also, in the above-described embodiment, there is provided the instrument panel **81** extending substantially in the vehicle width direction at the front end portion of the cabin **2**, the recessed storing portion **82** is formed at the portion of the instrument panel **81** which corresponds to at least part of the assistant seat **7b**, and the assistant seat **7b** moves forward, whereby at least part of the assistant seat **7b** can be stored in the storing portion **82** of the instrument panel **81**. Accordingly, by further moving the assistant seat **7b** forward by a distance which substantially corresponds to a recess of the storing portion **82**, much larger space can be made behind the temporary baby-care bed of the assistant seat **7b**.

Namely, according to the above-described embodiment as shown in FIGS. **8** and **9**, the storing portion **82**, in which the seat back **73** of the assistant seat **7b** held in its stored state of the substantially upright position is to be stored, is formed at the instrument panel **81**, and the assistant seat **7b** moves forward with the seat cushion **73** held in its stored state, whereby the seat cushion **73** can be stored in the storing portion **82**. Accordingly, the rear space behind the assistant seat **7b** can be enlarged effectively. Further, the assistant seat **7b** preferably can be used as the temporary baby-care bed, providing such an enlarged utility rear space behind the assistant seat **7b** when the seat back **75** of the assistant seat **7b** is held in its second-use state of the substantially horizontal position.

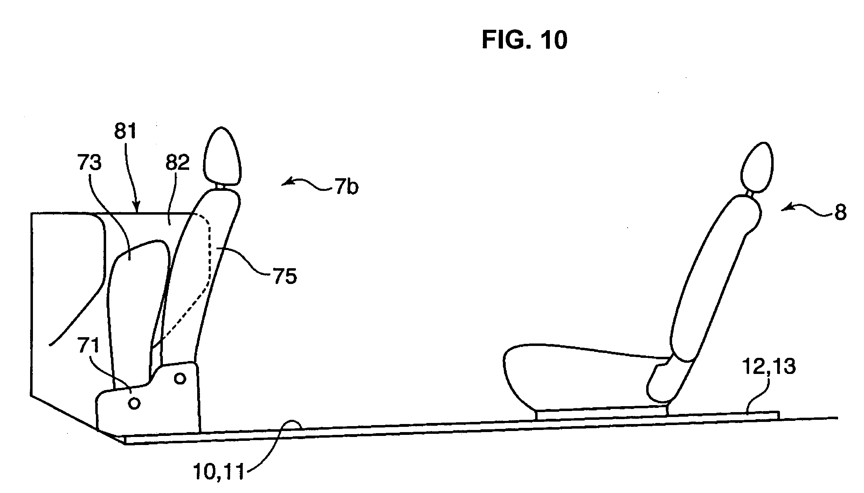

Also, in the case as shown in FIG. **10** where the recessed storing portion **82**, in which the seat back **73** and seat back **75** of the assistant seat **7b** held in their upright positions are to be at least partly stored, is formed at the instrument panel **81**, and both the seat cushion **73** and seat back **75** are at least partly stored in the storing portion **82**, the rear space behind the stored assistant seat **7b** can be further enlarged, so that the passenger of the rear-row seat **8** can easily get on or get off and the residential or staying space for the passenger can be greatly improved. And, the passenger's movement between the driver seat **7a** and the rear-row seat **8** can be facilitated.

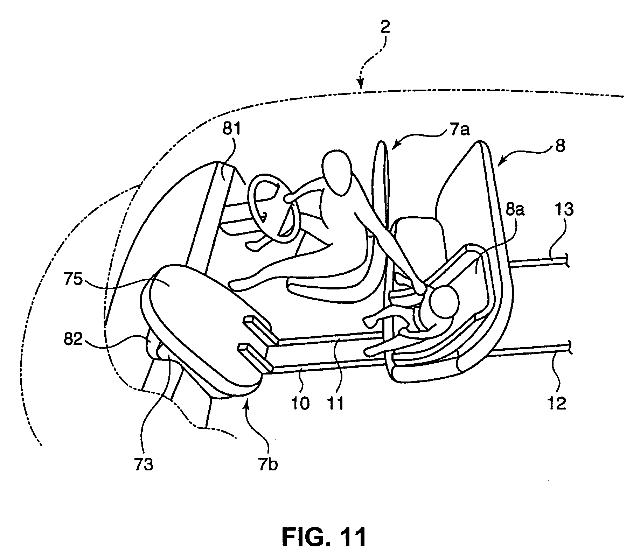

Further, as shown in FIG. **11**, by storing the assistant seat **7b** after its being moved to the front end portion of the cabin **2** along the seat rails **10** and **11** and moving forward the rear-row seat **8** to the center of the cabin **2** or substantially close to or near the driver seat **7a** along the seat rails **12** and **13**, the driver on the driver seat **7a** can easily take care of a child on a child seat **8a** located on the rear-row seat **8** during a vehicle stop and the like. Also, such a forward movement of the rear-row seat **8** along the seat rails **12** and **13** can also preferably enlarge a space in a luggage room at a rear portion of the vehicle.

Herein, in the case as shown in the embodiment where at least part of the seat rail **10**, **11** supporting the assistant seat **7b** movably substantially in the longitudinal direction of the vehicle and at least part of the seat rail **12**, **13** supporting the rear-row seat **8** movably substantially in the longitudinal direction of the vehicle, i.e., the left-side-located side rails **10** and **12,** are formed of the common or integral or unitary rail member, manufacturing costs can be reduced with a decrease of the number of parts, and an attachment rigidity of the seat rails can be strengthened effectively, facilitating attachment works of the seat rails **10** and **12**. Herein, the seat rails **10** and **12** may be made separately, instead of the above-described embodiment.

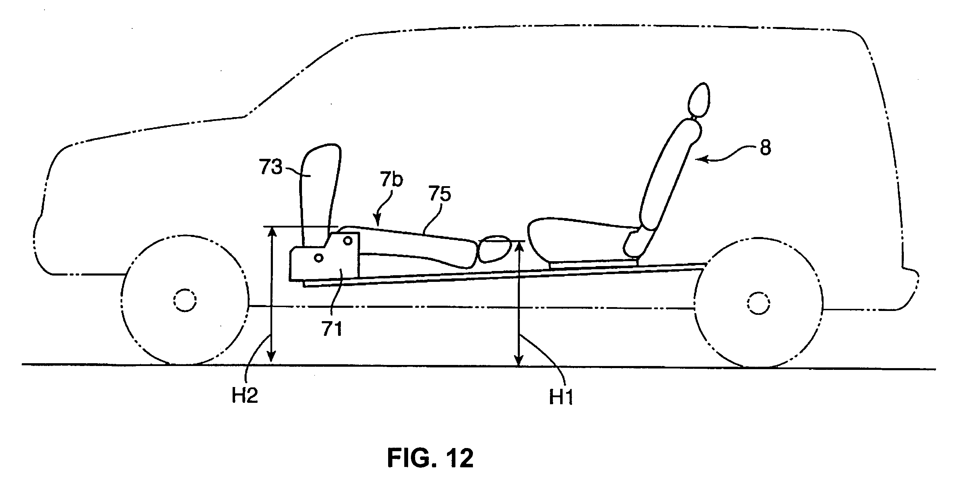

Also, as shown in FIG. **12**, the seat back **75** of the assistant seat **7b** supported by the support member **71** held in its second-use state of the substantially horizontal position may be configured such that the height **H1** of its rear end or distal portion e.g. above a road surface (or with respect to the floor panel **5**) is lower than the height **H2** of its front end portion e.g. above the road surface (or with respect to the floor panel **5**), so that the seat back **75** is positioned in a slant state (with repspect to a horizontal plane) where its rear portion is low. In this case, the baby's head placed on the front end portion of the seat back **75** can be located at a higher level than the baby's feet placed on the rear end portion of the seat back **75** when the assistant seat **75** is used as the temporary baby-care bed. Accordingly, the care of the baby such as the diaper changing can be easily conducted, laying down the baby on the bed in the stable position.

Herein, there may be provided an angle adjusting device operative to adjust a setting angle of the seat back **75** of the assisting seat **7b** and an inclined-state detecting device operative to detect an inclined state of the road surface, whereby the setting angle of the seat back **75** can be adjusted by the angle adjusting device according to a detected value of the inclined-state detecting device such that the height **H1** of its rear end portion above the road surface is lower than the height **H2** of its front end portion above the road surface. In this case, when the assistant seat **7b** is used as the temporary baby-care bed or the like, the baby's head placed on the front end portion of the seat back **75** as the bed body can be always located at the higher level than the baby's feet placed on the rear end portion of the seat back **75** regardless of the inclined state of the road surface. Therefore, the baby can be laid down on the bed in its stable position. In other words, the angle adjusting device can (preferably automatically) control the position the seat back **75** in such a way that it is inclined backward with respect to a horizontal plane largely independent of the actual position or inclination of the vehicle.

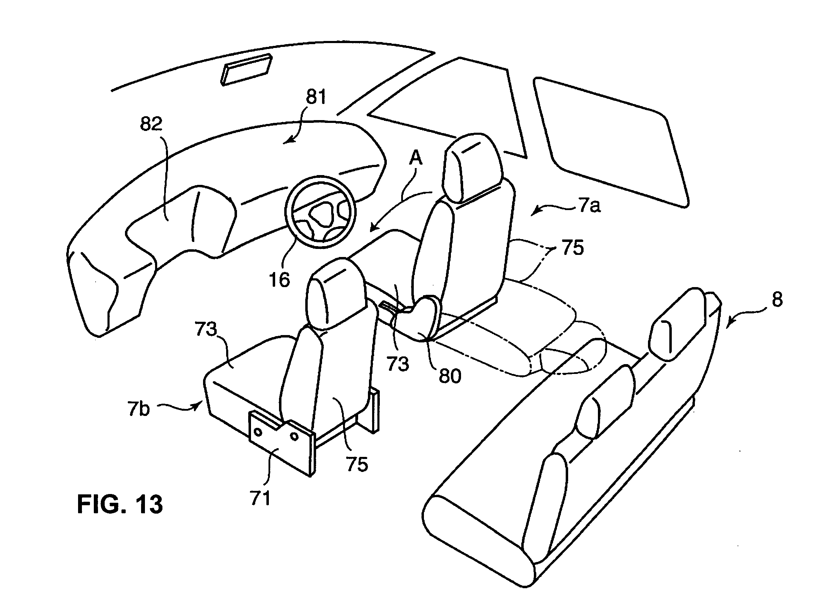

Also, as shown in FIG. **13**, either one of plural passenger seats disposed side by side in the vehicle width direction, which is supported by the support member **71**, may be comprised of the assistant seat **7b**, at another seat located beside the assistant seat **7b**, i.e., the driver seat **7a**, may be provided a reclining mechanism which supports its seat back **75** such that its seat back **75** is or can be selectively held in a standing state of a substantially upright position shown by a solid line in the figure or in a lying state of a substantially horizontal position by rotating or pivoting it substantially forward as shown by an arrow **A**, and at a portion near the assistant seat **7b** may be provided a shift device comprised of an operating lever 76 to ontrol or shift or move the state of seat back **75** between its standing state and its lying state.

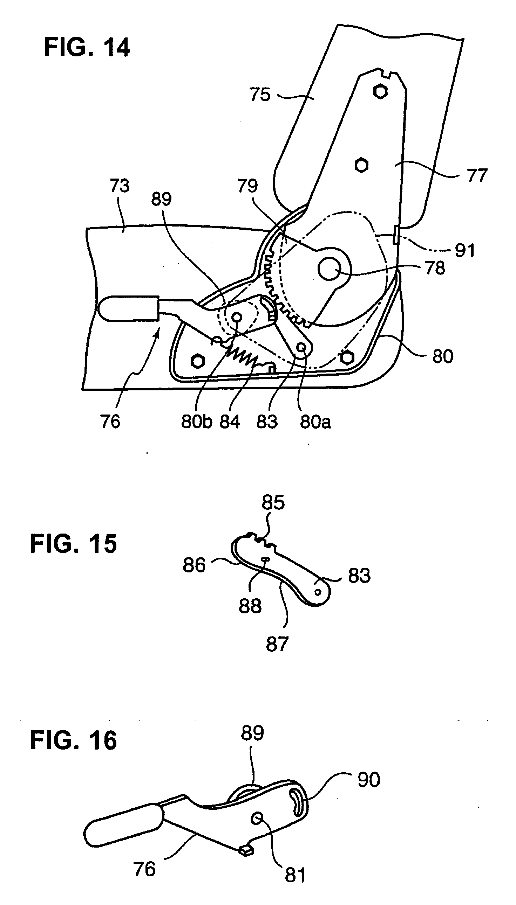

The above-described reclining mechanism, as shown in FIG. **14**, comprises a connecting member **77** to be attached to a lower side face of the seat back **75**, a sector gear **79** fixed to a pivotal axis **78** to pivotally support the connecting member **77**, a base plate **80** attached to a rear side face of the seat cushion **73**, a lock plate **83** and an operating lever **76** which are pivotally supported at the base plate **80** via pivotal axes **80a** and **80b** respectively, and biasing member such as a tension spring **84** operative to bias or push down the operating lever **76** around the pivotal axis 80b.

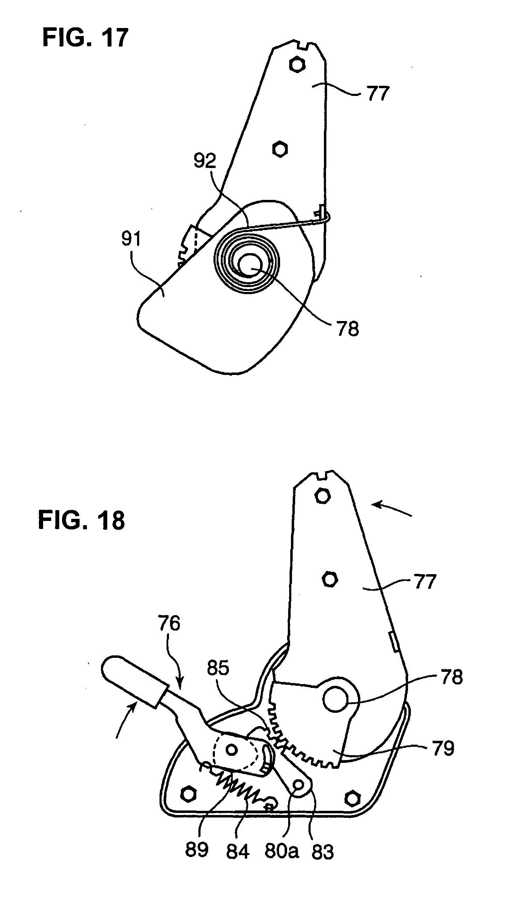

The lock plate **83**, as shown in FIG. **15**, has a gear portion **85** which is formed at an upper peripheral portion thereof and meshes with the above-described sector gear **79**, an arc-shaped protruding portion **86** and a recess portion which are formed at a lower peripheral portion thereof, and a projection **88** which is formed on an outside face thereof and engages in a guide groove **90** of the operating lever **76** described below. Also, the operating lever **76**, as shown in FIG. **16**, has a cam **89** which is fixed to an inner side face thereof and the guide groove **90**, which the projection **88** of the lock lever **80** engages in, which is formed at a base end portion thereof. Further, between the above-described connecting member **77** and an engagement member **91** fixed to the base plate **80** is provided a biasing member **92** preferably comprised of a torsion spring which biases the connecting member **77** counterclockwise, as shown in FIG. **17**, so that the seat back **75** mounted to the connecting member **77** is biased towards its standing position.

The seat back **75** is held in its substantially standing state as shown in FIG. **14** during its normal state, due to a restriction of the rotation of the sector gear **79** and connecting member **77** by locking the engagement of the gear portion **85** with the sector gear **79** according to the lock plate **83** being pushed toward the sector gear **79** by the cam **89**. Then, when the pushing of the lock plate **83** by the cam **89** is released by operating the operating lever **76** e.g. upward, the gear portion **85** of the lock plate **83** is disengaged with the sector gear **79**, resulting in an unlocked state as shown in FIG. **18**. Accordingly, the connecting member **77** is rotated or pivoted counterclockwise by a biasing force of the above-described biasing member **92**, and then the seat back **75** is moved forward, preferably until being folded substantially on the seat cushion **73**.

Also, a setting angle of the seat back **75** of the driver seat **7a** is adjustable preferably between its standing state of the substantially upright position and its lying state of the substantially horizontal position with its lower end portion in its standing state located forward (as shown by the two-dotted broken line in FIG. **13**) within an engagement range of the sector gear **79** with the gear portion **85** of the lock plate **83**, by reclining the seat back **75** rearward during the unlocked state of the connecting member **77**.

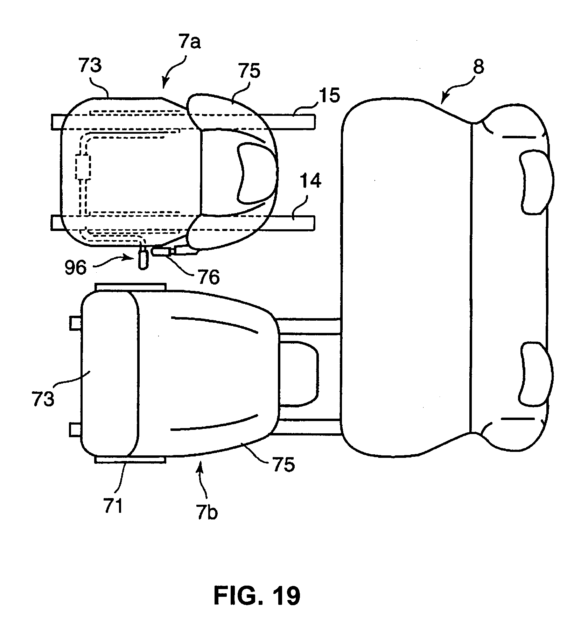

There is provided, as described above, a shift mechanism comprised of the reclining mechanism which can shift the seat back **75** of the driver seat **7a** between its standing state (of the substantially upright position) and its lying state (of the substantially horizontal position), and a shifting device comprised of the operating lever **76** operative to operate the above-described shifting mechanism is disposed near the assistant seat **7b**, i.e., on or near a side wall face of the driver seat **7a** beside the assistant seat **7b**. In this case, as shown in FIG. **19**, when the either one (the assistant seat **7b**) of the plural front-row seats **7** disposed substantially side by side in the vehicle width direction is used as the temporary baby-care bed, the seat back **75** of the other seat (the driver seat **7a**) can be shifted from its standing state (of the substantially upright position) to its lying state (of the substantially horizontal position) by the passenger preferably on the rear-row seat **8** operating the operating lever **76**, thereby facilitating a folding operation of the seat back **75** on or towards the seat cushion **73**. Accordingly, the passenger on the rear-row seat **8** preferably can use properly the back face of the seat back **75** of the driver seat **7a** as a tray or the like on which any articles are placed temporarily when taking care of the baby on the temporary baby-care bed comprised of the assistant seat **7b**.

Further, in the case where the seat back **75** of the driver seat **7a** is reclined rearward to be held in its lying state of the substantially horizontal position shown by the two-dotted broken line in FIG. **13**, the passenger on the rear-row seat **8** preferably can use properly both the seat cushion **73** and the back face of the seat back **75** of the driver seat **7a** as the tray or the like on which any articles are placed temporarily when taking care of the baby on the temporary baby-care bed comprised of the assistant seat **7b**.

Also, as shown in FIG. **19**, at a specified portion near or at the assistant seat **7b** may be provided an operating lever **96** of an engagement mechanism operative to adjust the driver seat **7a** at any desired positions which movably slides substantially in the longitudinal direction of the vehicle along the seat rails **14** and **15**. In this case, the passenger on the rear-row seat **8** can properly adjust the longitudinal position of the driver seat **7a** by operating the operating lever **96** to disengage the engagement mechanism for the driver seat **7a**, resulting in a convenient use of the driver seat **7a** as the tray or the like.

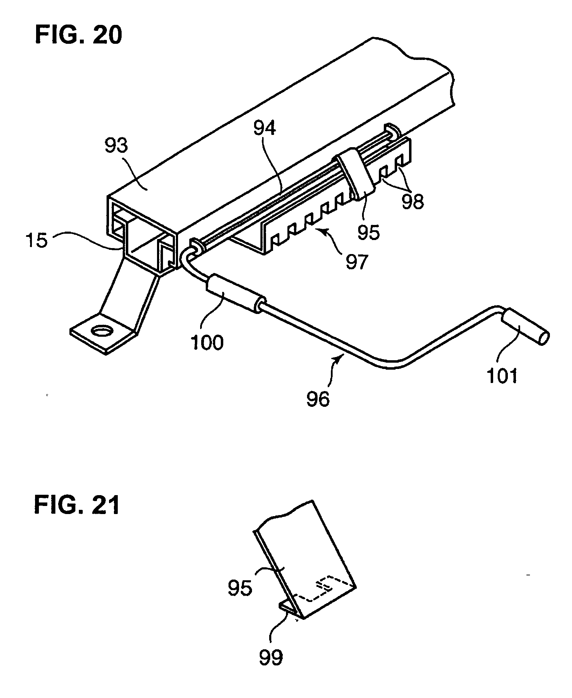

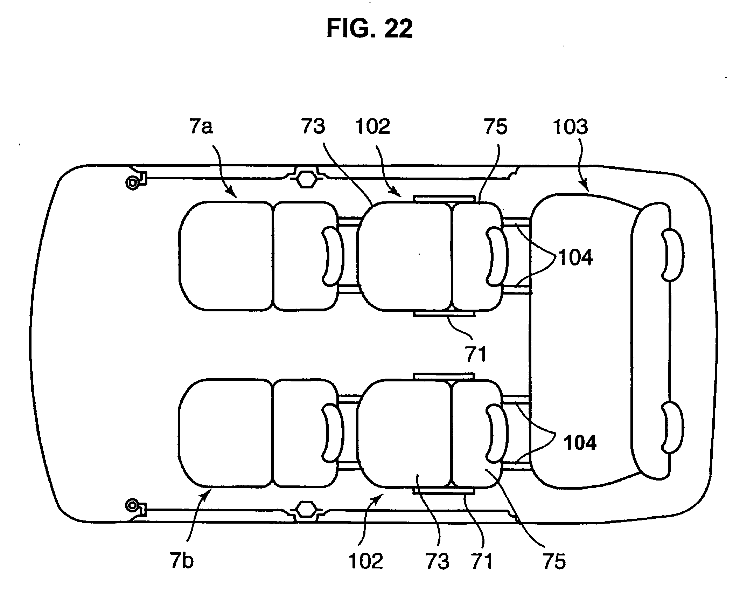

Namely, the above-described engagement mechanism, as shown, for example, in FIGS. **20** and **21**, comprises a slide member **93** to be movably supported along the seat rail **15** and the like for the driver seat **7a**, an acting or actuating rod **94** to be rotatably supported at the side face of the seat rail **15**, an engagement arm **95** to be fixed to the acting rod **94**, the above-described operating lever **96** to be connected to a tip or end portion of the acting rod **94** and at least partly extend outside, and an engagement member **97** to be attached to the side wall face of the seat rail **15**. The operating lever **96** preferably is provided such that it is bent substantially rearward below the driver seat **7a** and its tip projects toward the side of the assistant seat **7b**.

The engagement member **97** has at its side face a tooth-shaped engagement portion **98**, teeth of which are formed at regular intervals. The engagement arm **95** has an engagement portion **99** to engage with either one of teeth of the engagement portion **98** at its lower end portion. Normally, the engagement portion **99** of the engagement arm **95** is let engaged with the engagement portion **98** by a biasing force of a biasing member (not illustrated) preferably comprised of a torsion coil spring or the like, which is provided at or on the acting rod **94**, thereby limiting a longitudinal movement of the slide member **93** and the driver seat **7a**. Also, rotating the operating lever **96** upward by operating a first grip **100** provided at the center of the operating lever **96** or a second grip **101** provided at a tip or end portion of the operating lever **96** lets the acting rod **94** rotate or pivot in its disengagement direction so that the engagement portion **99** of the engagement arm **95** can go away from the engagement portion **98** of the engagement member **97**, resulting in a disengagement of the engagement mechanism for the driver seat **7a**.

Accordingly, when the passenger on the rear-row seat **8** preferably wants to use the diver seat **7a** as the tray or the like on which any articles are placed temporarily, the driver seat **7a** can be moved longitudinally with the disengagement of the engagement mechanism for the driver seat **7a** by rotating or pivoting the operating lever **96** substantially upward by operating the second grip **101** provided at the side of the assistant seat **7b.** Herein, when the passenger on the driver seat **7a** wants to adjust the longitudinal position of the driver seat **7a,** the driver seat **7a** can be held in its adjustable state with the disengagement of the engagement mechanism for the driver seat **7a** by rotating the operating lever **96** upward by operating the second grip **101** provided at the side of the assistant seat **7b**.

Herein, the above-described embodiment shows one example in which the seat cushion **73** of the assistant seat **7b** disposed at the front portion in the cabin **2** is selectively held in its sitting state or its stored state and the seat back **75** is selectively held in its first-use state or its second-use state, whereby the assistant seat **7b** preferably can be used as the temporary baby-care bed or as a support surface. However, the driver seat **7a** may be used as the temporary baby-care bed in place of the assistant seat **7b**, or the front-row seat **7** comprised of the driver seat **7a** along with the assistant seat **7b** may be also used as the temporary baby-care bed. Also, the rear-row seat **8** may be used as the temporary baby-care bed with a structure in which the seat cushion of the rear-row seat **8** disposed behind the front-row seat **7** is selectively held in its sitting state or its stored state and its seat back is selectively held in its first-use state or its second-use state.

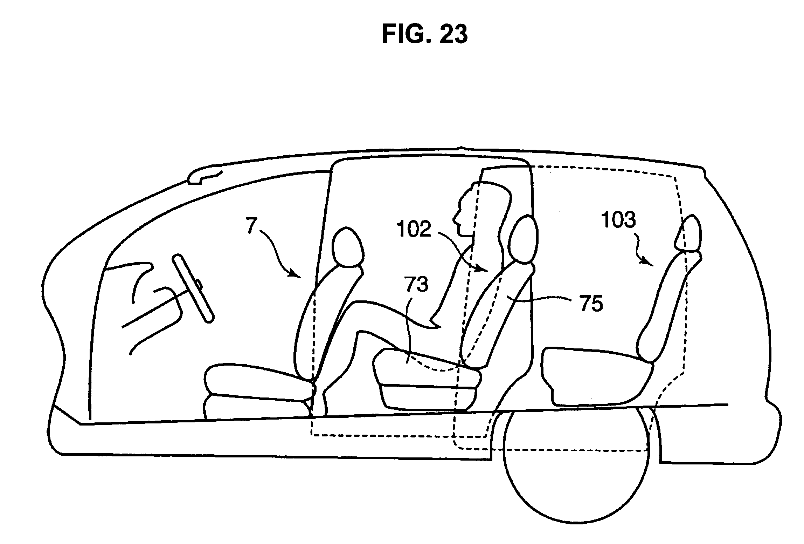

Further, in a three-row seat type of vehicle with a first-rear-row seat **102** and a second-rear-row seat **103,** which are disposed behind the front-row seat **7,** shown in FIGS. **22** and **23**, there may be provided a support member **71** operative to support a seat cushion **73** and a seat back **75** of the first-rear-row seat **102** in such a manner that the seat cushion **73** is selectively held in its normal sitting state of the substantially horizontal position or in its stored state of the substantially upright position with its front end in the sitting state located upward, whereas the seat back **75** is selectively held in the above-described first-use state or in the second-use state.

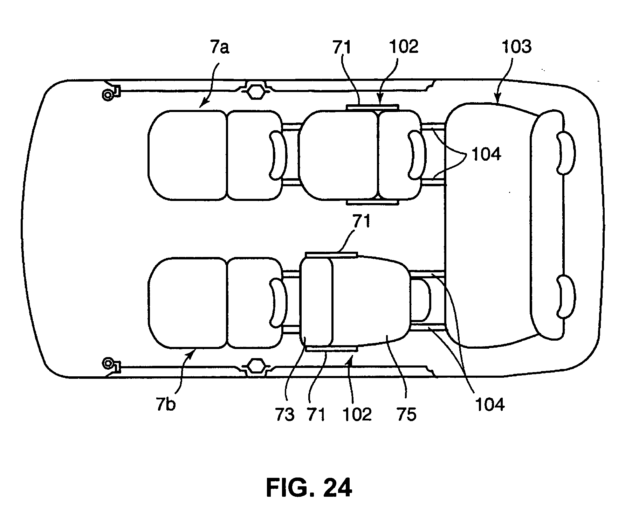

In this case, as shown, for example, in FIG. **24**, the seat cushion **73** of the first-rear-row seat **102** (a left-side-located rear-row seat) behind the assistant seat **7b** or the like is held in its substantially upright position and the seat back **75** of the first-rear-row seat **102** is held in its second-use state of the substantially horizontal position, whereby the first-rear-row seat **102** can be used as the temporary baby-care bed and the passenger on the third-rear-row seat **103** can easily and properly take care of the baby or the like on the bed comprised of the first-rear-row seat **102**. Also, the first-rear-row seat **102** can be adjusted at an appropriate position for using it as the temporary baby-care bed by sliding the seat **102** in the longitudinal direction along the seat rail **104**.

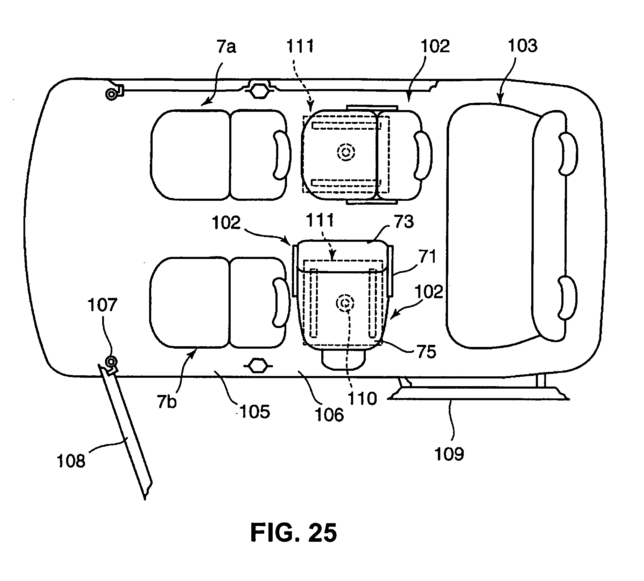

Further, FIG. **25** shows another example of a vehicle, in which ingress-and-egress opening portions **105** and **106** are formed at the side of the passenger seats and there are provided a hinge door **108** to open and close the front ingress-and-egress opening portion **105** by rotating around a door hinge **107** and a slide door **109** to open and close the rear ingress-and-egress opening portion **106** by sliding substantially in the longitudinal direction of the vehicle. In this example, by use of a rotational support mechanism **111**, which is disposed at a portion corresponding to the disposition of the slide door **109** and supports the first-rear-row seat **102** rotatably around a rotational axis **110** extending in the substantially vertical direction, the first-rear-row seat **102** may be selectively held in a normal state where a back face of its seat back **75** turns rearward or in a state where the back face of its seat back **75** turns toward the ingress-and-egress opening portion **106** as shown in FIG. **25**.

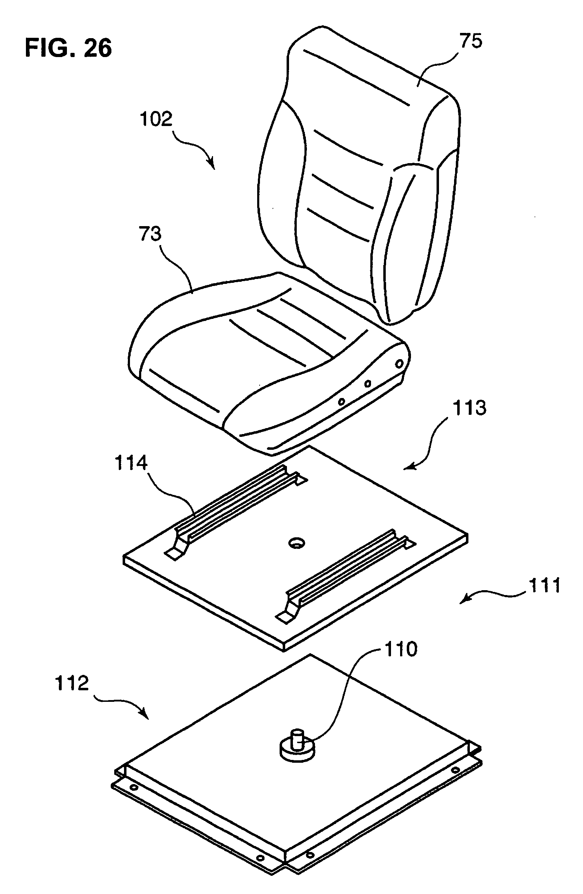

FIG. **26** shows an exemplified specific structure of the above-described rotational support mechanism **111**, in which there are provided a fixed plate **112** to be fixed to the vehicle body and a rotary plate **113** to be supported rotatably around the rotational axis **110** provided at the fixed plate **112**, and the first-rear-row seat **102** is supported so as to slide along the seat rail **114** on the rotary plate **113**. By rotating the rotary plate **113** around the rotational axis **110**, the first-rear-row seat **102** is configured so as to be selectively held in the normal state where the back face of its seat back **75** turns rearward (see FIG. **22**) or in the state where the back face of its seat back,**75** turns toward the ingress-and-egress opening portion **106** (see FIG. **25**) and the first-rear-row seat **102** is also supported so as to slide substantially along the seat rail **114**.

In this case, the first-rear-row seat **102** can be used as the temporary baby-care bed, by rotating the seat **102** in such a manner that the back face of its seat back **75** turns toward the ingress-and-egress opening portion **106**, and then holding the seat back **75** in its substantially lying or reclined state with its upper end located at the outside of the vehicle along with the seat cushion **73** being in its upright position. Also, when the slide door **109** is opened, the care of the baby on the bed can be easily conducted through the ingress-and-egress opening portion **106** from the outside of vehicle. Further, the first-rear-row seat **102** can be moved to any positions where the care of the baby or the like on the bed can be easily and properly conducted, by sliding the first-rear-row seat **102** along the seat rail **114** when the back face of its seat back **75** turns toward the ingress-and-egress opening portion **106**.

Further, according to the above-described embodiment of the vehicle in which there are provided the hinge door **108** to open and close the front ingress-and-egress opening portion **105** by rotating or pivoting around the door hinge **107** and the slide door **109** to open and close the rear ingress-and-egress opening portion **106**, the first-rear-row seat **102** including the above-descried support member **71** and rotational support mechanism **111** is disposed at the portion which corresponds to the disposition of the slide door **109**. Accordingly, when the first-rear-row seat **102** is rotated such that the back face of its seat back **75** turns toward the ingress-and-egress opening portion **106** and the ingress-and-egress opening portion **106** beside the rotated seat **102** is opened widely sliding rearward, the care of the baby on the bed can be conducted easily.

Herein, instead of the above-described embodiment in which the first-rear-row seat **102** is rotated around the rotational axis **110** extending vertically such that the back face of its seat back **75** turns toward the ingress-and-egress opening portion **106**, the assistant seat **7b** of the front-row seat **7** may be supported rotatably around a rotational axis vertically or the rearmost second-rear-row seat **103** may be comprised of right and left seats which are separate from each other, and the seats may be shifted such that the back faces of these seats turn toward the ingress-and-egress opening portion, whereby these seat backs preferably can be used as the temporary baby-care bed.

Further, according to the above-described embodiment in which the driver-seat placed portion of the floor panel **5** constitutes the low-floor panel portion, the assistant-seat placed portion of the floor panel **5** constitutes the high-floor panel portion, the downward-recessed portion **9** is formed at the portion of the floor panel **5** on which the driver seat **7a** is placed, and the fuel tank **27** is disposed so as to cover part of the recess portion **9**, i.e., part of the inside face and the rear end face of the recess portion **9,** there can be provided an enough space at the foot portion of the driver seat **7a** so that the driver can easily get on or get off. Also, the residential space for the passenger on the driver seat **7a** can be improved by providing a sufficient amount of vertical movement in shifting the driving position of driver with respect to the driving seat **7a**. Also, the fuel tank **27** with a large volume can be disposed efficiently by utilizing the large space formed below the floor panel portion at the assistant seat **7b**.

Also, according to the above-described embodiment in which there are provided the front-row seat **7** comprising the driver seat **7a** and the assistant seat **7b** at the front portion in the cabin **2** and the rear-row seat **8** disposed behind the front-row seat **7**, and the substantially L-shaped fuel tank **27**, when viewed from above, including the tank-body portion **27a** provided below the rear-row seat **8** and the front-extending portion **27b** extending below the assistant seat **7b** is disposed at the high-floor panel portion, the volume of the fuel tank **27** can be made large. Further, the fuel tank **27**, which may become heavy when it is fully filled, can be located closer to the gravity center of the vehicle which is ideally positioned at or near the center of the cabin **2**, and therefore the inner moment occurring during the vehicle turning can be reduced effectively.

Herein, the fuel tank **27** may be formed separately into the tank-body portion **27a** and the front-extending portion **27b**. In this case, however, a connecting pipe to interconnect these portions **27a** and **27b** is necessary, resulting in a complex structure. Also, since some supporting members for supporting portions **27a** and **27b** respectively at the vehicle body are necessary, supporting works of the fuel tank **27** may be complex as well. For this reason, the above-described structure may be more preferable, in which the substantially L-shaped fuel tank **27** with the tank-body portion **27a** and the front-extending portion **27b** is integrally disposed at the high-floor panel portion of the floor panel **5**.

Also, according to the above-described embodiment in which the exhaust pipe **30** is disposed between the recess portion **9** and the fuel tank **27** which is disposed so as to enclose the recess portion **9** formed at the driver-seat placed portion, both the fuel tank **27** and the exhaust pipe **30** can be provided efficiently by using effectively the space below the floor panel **5**, avoiding a high floor of the floor panel **5** which may be caused by putting one over another.

Further, according to the above-described embodiment in which other portion of the floor panel **5** than the driver-seat placed portion, or the other-passenger-seat placed portion at the assistant seat **7b** and the rear-row seat **8** is formed of the substantially flat face, the rail seats **10** through **13** can be disposed at appropriate locations on the other-passenger-seat placed portion, providing a sufficient designing flexibility of the space at this portion in the cabin **2**. And, by utilizing the space below the floor panel portion at the other passenger seats **7b** and **8**, the flat and low floor of the floor panel **5** can be obtained, and the fuel tank **27**, exhaust pipe **30** and the like can be easily and properly disposed.

Also, according to the above-described embodiment in which the other-passenger-seat placed portion of the floor panel **5** is disposed slant with its rear being positioned higher such that the rear space below the floor panel **5** is larger, the sufficiently large volume of the fuel tank **27** can be obtained by designing the tank with its thick rear portion. Further, a larger foot space of the passenger can be provided during their getting on or getting off the vehicle because the floor panel surface of the other-passenger-seat placed portion at the assistant seat **7b** and the rear-row seat **8** is disposed slant with its front being positioned lower. Therefore, the passenger can easily get on or off the vehicle.

Further, according to the above-described embodiment in which the bottom face of the recess portion **9** formed at the driver-seat placed portion of the floor panel **5** is disposed substantially horizontally, the vertical position of the driver seat **7a** can be prevented from changing when the driver seat **7a** is moved longitudinally along the guide rails **14** and **15** according to the body size of the driver. Accordingly, the driving position of the driver can be maintained stably. Also, the distance between the driver's head and a roof of the cabin **2** can be prevented from changing.

Namely, it may be possible that the bottom face of the recess portion 9 formed at the driver-seat placed portion of the floor panel 5 is disposed slant such that its rear is positioned higher, like the other-passenger-seat placed portion. In this case, however, the position of the driver seat **7a** changes vertically according to the longitudinal moment of the driver seat **7a**. Accordingly, the relative vertical position of the driver with respect to the steering wheel **16**, accelerator pedal **17** and brake pedal **18** changes, so that the driving position may become unstable and the distance between the driver's head and the roof of the cabin **2** may become small inevitably according to the driver seat **7a** moving rearward.

However, in the case where the bottom face of the recess portion **9** is disposed substantially horizontally as described above, the relative position of the driver with respect to the steering wheel **16**, accelerator pedal **17** and brake pedal **18** can be maintained to be constant regardless of the longitudinal movement of the driver seat **7a**, and therefore the driving position can be made stable. Further, the distance between the driver's head and the roof of the cabin **2** can be maintained to be constant without any countermeasures, such as designing the roof of the cabin **2** to be located inappropriately higher or providing an additional device to lower the driver seat, in order to avoid the contact of the driver's head with the roof according to the driver seat **7a** being moved rearward. Therefore, the comfortableness of the driver sitting on the driver seat **7a** can be also effectively improved.

Also, according to the above-described embodiment in which the No. 3 cross member **22** extending substantially laterally below the floor panel **5** is located crossing over the central portion of the fuel tank **27**, the vehicle rigidity can be effectively strengthened against a vehicle side impact or the like by reinforcing the disposed portion of the fuel tank **27** effectively by the No. 3 cross member **22**. And, the supporting strength of the fuel tank 27 can be effectively improved by making use of the No. 3 cross member **22** as the support member of the fuel tank **27**.

Herein, the present invention should not limited to the above-described embodiments, but any other modifications and improvements may be applied within the scope of the present invention as defined in the claims.

## Claims

1. A seat device for a vehicle, in which a cabin (**2**) including an ingress-and-egress opening portion (**1**; **105**; **106**) on a side face thereof is provided between a front-wheel axle (**3**) and a rear-wheel axle (**4**), comprising:
plural passenger seats (**7; 7a; 7b; 8; 102; 103**) including a driver seat (**7a**), which are disposed on a floor panel (**5**) provided at a lower portion of the cabin (**2**);
a support member (**71**) operative to support a seat cushion (**73**) and a seat back (**75**) of at least one of said passenger seats (**7; 7a; 7b; 8; 102; 103**) in such a manner that the seat cushion (**73**) is selectively held in a sitting state of a substantially horizontal position or in a stored state of a substantially upright position with a front end thereof in the sitting state located upward, whereas the seat back (**75**) is selectively held in a first-use state of a substantially upright position or in a second-use state of a substantially horizontal position with a lower end thereof in the first-use state located forward; and
a seat rail (**10, 11; 12, 13; 14, 15; 104; 114**) operative to support said at least one of passenger seats (**7; 7a; 7b; 8; 102; 103**) such that the at least one of passenger seats (**7; 7a; 7b; 8; 102; 103)** moves forward substantially in a longitudinal direction of the vehicle.

2. The seat device for a vehicle of claim 1, wherein said at least one of passenger seats (**7; 7a; 7b; 8; 102; 103**) supported by said support member (**71**) comprises a front-row seat (**7; 7a; 7b**) which is located at a front portion in the cabin (**2**), and a rear-row seat (**8; 102; 103**) is provided behind the front-row seat (**7; 7a; 7b**).

3. The seat device for a vehicle of claim 2, wherein there is provided an instrument panel (**81**) extending substantially in a vehicle width direction at a front end portion of the cabin (**2**), a recessed storing portion (**82**) is formed at a portion of said instrument panel (**81**) which corresponds to at least part of said front-row seat (**7b**), and the front-row seat (**7b**) moves forward along said seat rail (**10, 11**), whereby said at least part of the front-row seat (**7b**) can be stored in said storing portion (**82**).

4. The seat device for a vehicle of claim 3, wherein said front-row seat **(7b)** moves forward along said seat rail (**10, 11**) with the seat cushion (**73**) thereof being held in said stored state, whereby the seat cushion (**73**) of the front-row seat (**7b**) can be at least partly stored in said storing portion (**82**).

5. The seat device for a vehicle of claim 3, wherein said front-row seat (**7b**) moves forward along said seat rail (**10, 11**) with the seat cushion (**73**) thereof being held in said stored state and with the seat back (**75**) thereof being held in said first-use state, whereby the seat cushion (**73**) and seat back (**75**) of the front-row seat (**7b**) can be at least partly stored in said storing portion (82).

6. The seat device for a vehicle of any one of claims 2 through 5, wherein at least part of the seat rail (**10, 11**) supporting said front-row seat (**7b**) movably substantially in the longitudinal direction of the vehicle and at least part of the seat rail (**12, 13**) supporting said rear-row seat (**8**) movably in the longitudinal direction of the vehicle are formed of a common rail member.

7. The seat device for a vehicle of any one of claims 1 through 6, wherein the seat back (**75**) of said at least one of passenger seats (**7; 7a; 7b; 8; 102; 103**) supported by said support member (**71**) in said second-use state is configured such that a height (**H1**) of a rear end portion thereof is lower than that (**H2**) of a front end portion thereof.

8. The seat device for a vehicle of any one of claims 2 through 7, wherein said at least one of passenger seats supported by said support member (**71**) comprises either one (**7b**) of plural front-row seats (**7; 7a; 7b**) which are disposed substantially side by side substantially in a vehicle width direction, another seat (**7a**) located beside said either one seat (**7b**) includes a seat back (**75**) which is configured so as to be selectively held in a standing state of a substantially upright position or in a lying state of a substantially horizontal position, and at a portion near the either one seat (**7b**) is provided a shift device (**76**) operative to shift a state of the seat back (**75**) between said standing state and said lying state.

9. The seat device for a vehicle of any one of claims 1 through 8, wherein said at least one of passenger seats (**7b; 102; 103**) supported by said support member (**71**) is located substantially at a side of said ingress-and-egress opening portion (**1**; **105; 106**), there is provided a rotational support mechanism (**111**) to support said at least one of passenger seats (**7b; 102; 103**) rotatably around a rotational axis (**110**) extending in a substantially vertical direction, whereby said at least one of passenger seats (**7b; 102; 103**) can be selectively held in a state where a back face of the seat back (**75**) thereof turns substantially rearward or in a state where the back face of the seat back (**75**) thereof turns substantially toward the ingress-and-egress opening portion (**1; 105; 106**).

10. The seat device for a vehicle of claim 9, wherein there are provided a hinge door (**108**) to open and close the ingress-and-egress opening portion (**105**) by rotating around a door hinge (**107**) and a slide door (**109**) to open and close the ingress-and-egress opening portion (**106**) by sliding in the longitudinal direction of the vehicle, and said at least one of passenger seats (**102**) supported by the support member (**71**) and equipped with said rotational support mechanism (**111**) is located at a portion corresponding to said slide door (**109**).

11. A vehicle provided with a seat device according to one of the preceding claims.
